Europäisches Patentamt

European Patent Office

Office européen des brevets

(19)

(11) Numéro de publication: **0 169 118**
A1

## (12) DEMANDE DE BREVET EUROPEEN

(21) Numéro de dépôt: **85401237.4**

(22) Date de dépôt: **20.06.85**

(51) Int. Cl.⁴: **A 47 F 10/00**, B 65 G 47/10

(30) Priorité: **20.06.84 FR 8409681**

(43) Date de publication de la demande: **22.01.86**
**Bulletin 86/4**

(84) Etats contractants désignés: **BE CH DE GB LI**

(71) Demandeur: **Grange, Jean - Marie, 8, rue Y. Tourgueneff, F-78150 Bougival (FR)**

(72) Inventeur: **Grange, Jean - Marie, 8, rue Y. Tourgueneff, F-78150 Bougival (FR)**

(74) Mandataire: **Bonnetat, Christian et al, Cabinet PROPI Conseils 23 rue de Léningrad, F-75008 Paris (FR)**

(54) **Dispositif pour la desserte mécanisée d'un point de vente en grande surface.**

(57) L'invention concerne un système de transport individuel autonome et programmé au sein d'un ensemble.

Selon l'invention, on a prévu une pluralité de chariots (1) individuels mis à la disposition des clients pour parcourir un local d'exposition de produits en vente sur des rayons (7). Les chariots comportent des organes d'entraînement mécanique autonomes et de moyens de direction soumis au contrôle d'une unité centrale (32) apte à contrôler et réguler le trafic de l'ensemble des chariots en service, chaque chariot (1) comportant un pupitre de commande (5) à la disposition du client et permettant d'afficher les consignes relatives au circuit souhaité, et les ordres d'achat, reçus par l'unité centrale (32), les produits correspondants sont délivrés automatiquement depuis un local annexe d'entrepôt dans des seconds chariots (44) remis en fin de parcours au client correspondant.

Application à la desserte mécanisée d'un point de vente en grande surface.

ACTORUM AG

Dispositif pour la desserte mécanisée d'un point de vente en grande surface.

La présente invention concerne un dispositif pour la desserte mécanique et automatique de points de vente en grandes surfaces et permettant notamment le déplacement à l'intérieur de la surface du magasin grâce à des moyens mécaniques tant pour le personnel de service que pour les clients ou consommateurs.

On connaît déjà par les brevets français n° 1 532 296 et 73 33876 et le brevet américain n° 3 881 574 au nom du demandeur, un dispositif en vue de la desserte par des moyens automatiques et mécanisés de magasins en hypermarché.

La présente invention a pour objet de permettre un parcours individualisé en fonction des intentions d'achat des clients.

Un autre objet de l'invention est d'automatiser l'acte d'achat en évitant au client le prélèvement manuel du produit choisi dans le rayon, et qui pourra ainsi être mis mécaniquement dans un conteneur affecté audit client.

A cet effet, l'invention concerne un dispositif pour la desserte mécanisée de point de vente à grande surface et constitué d'une pluralité d'allées entre des rayons d'exposition de produits, du type comportant une pluralité de chariots, pourvu d'organes de déplacement autonome et apte à recevoir et véhiculer au moins un client et le dispositif est caractérisé en ce qu'il comporte :

1) - des moyens de commande desdits organes de déplacement des chariots, aptes à régler la vitesse et la direction de ces derniers ;

2) - une unité centrale telle qu'un micro-processeur, apte à contrôler et harmoniser le circuit de l'ensemble des chariots en service à un instant déterminé, en contrôlant lesdits moyens de commande.

3) - des moyens de sélection regroupés sur un pupitre de commande situé sur ledit chariot et à la disposition du client et propre à la saisie des ordres de parcours et d'achat du client.

4) - des moyens de transmission, définissant des circuits de transmission sans fil d'une part desdits ordres depuis le chariot vers l'unité centrale et d'autre part des signaux émis par l'unité centrale et destinés auxdits moyens de commande sur chaque chariot.

5) - des moyens de repérage du positionnement des chariots disposés respectivement sur chaque chariot et sur des points fixes situés sur lesdites allées et rayons, ces moyens de repérage étant reliés à l'unité centrale par un circuit de transmission en permettant à l'unité centrale de vérifier et d'enregistrer à tout moment le positionnement instantané et individuel de chaque chariot.

6) - et l'unité centrale comporte en outre un programme apte à commander pour chaque chariot en fonction des instructions du client saisi par le pupitre, le déplacement dudit chariot selon un circuit desservant les rayons sélectionnés par ledit client.

La figure 1 représente une vue en perspective de deux chariots se déplaçant le long d'un rayon de vente dans le cadre de l'installation selon l'invention.

La figure 2 représente une vue d'un pupitre de sélection de circuit et d'informations sur les produits mis à la disposition de chaque utilisateur sur les chariots individuels.

La figure 3 représente une vue d'un schéma de principe d'une installation selon l'invention.

La figure 4 représente une vue d'un schéma selon une variante de réalisation.

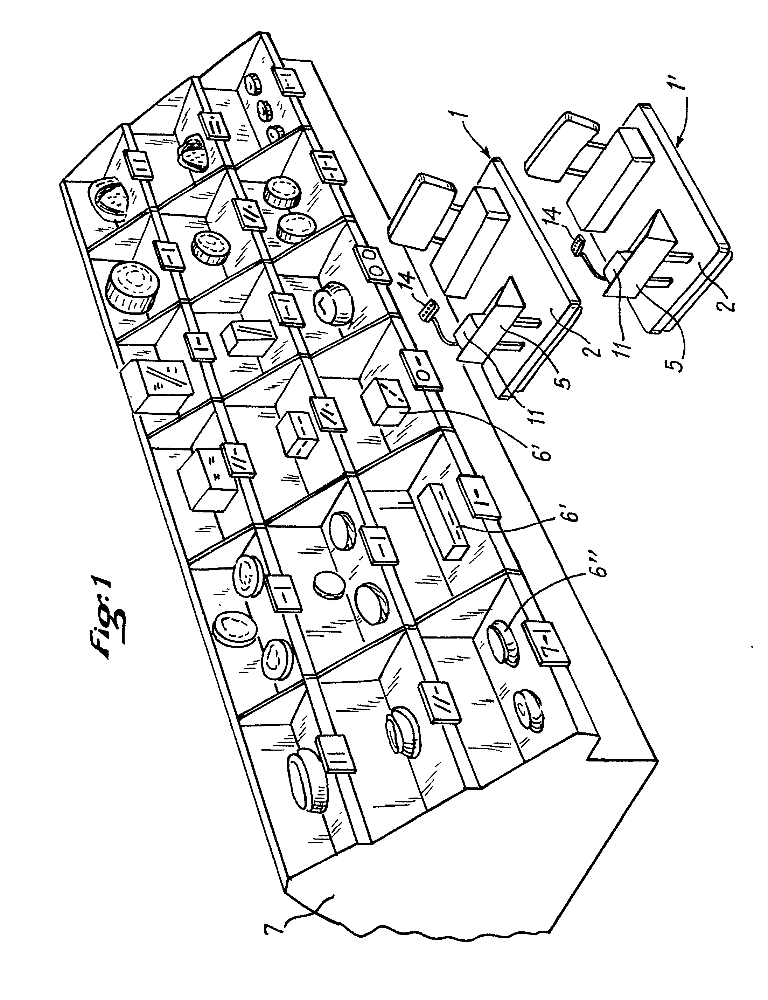

Le dispositif de l'invention fait appel à une pluralité de chariots du type auto-moteurs dont un exemple est représenté à la figure 1.

Ce chariot 1,1' est pourvu de moyens de déplacement mécanique, (roulement motorisé ou coussin d'air), les moyens de commande de déplacement du chariot 1 situés dans la plate forme 2 (et régulant la vitesse et la direction) sont télécommandés par le circuit de transmission sans fil 47 reliant chaque chariot 1,1' à une unité centrale 32 constituée d'un microprocesseur régulant l'ensemble du trafic des chariots 1,1'.

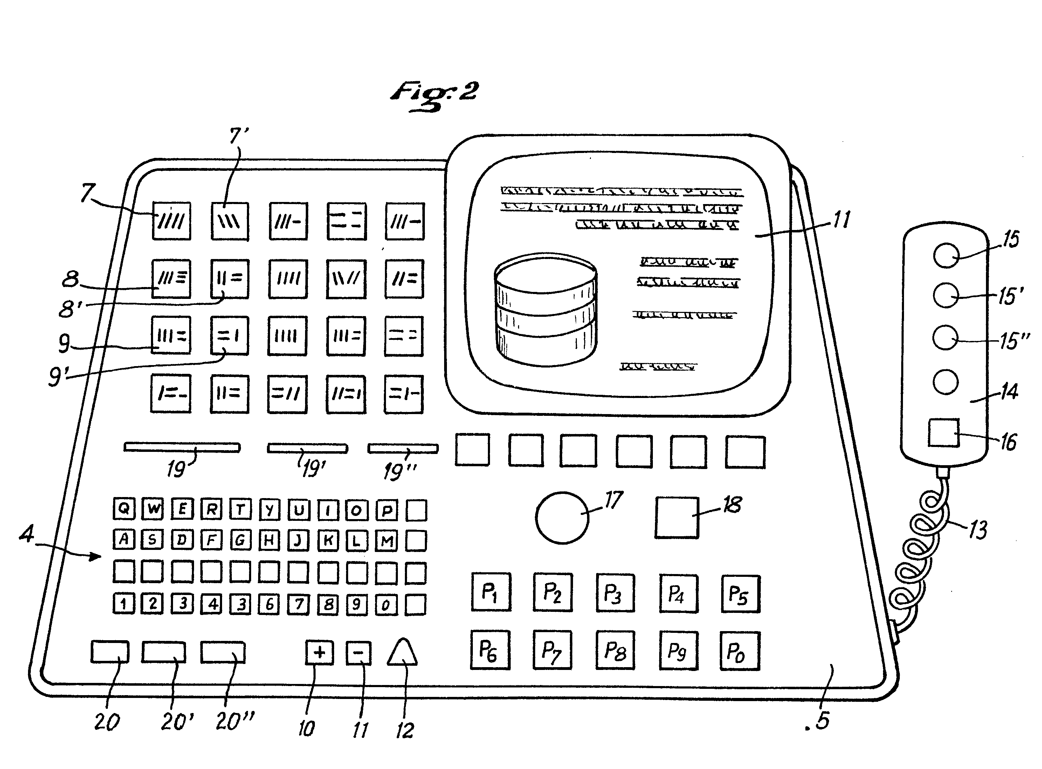

Chaque chariot motorisé 1,1' comporte un pupitre de commande et de visualisation 5 dont une vue en détail est représentée à la figure 2.

On voit sur la figure 2 que le pupitre comporte une pluralité de touches permettant l'affichage et la sélection d'un certain nombre de données.

Les voyants 7,7',8,8',9,9' correspondent à l'identification des rayons de sorte que au départ le client peut programmer son circuit en sélectionnant les divers rayons qu'il souhaite visiter.

Ce choix étant effectué, le pupitre 5 transmet par le circuit de transmission sans fil 28 les signaux (correspondant aux rayons sélectionnés) à l'unité centrale 32 qui, en fonction de l'encombrement des voies, programme le parcours du chariot de façon à lui imprimer le mouvement de déplacement selon une vitesse compatible avec l'état d'encombrement des allées et les déplacements des autres chariots.

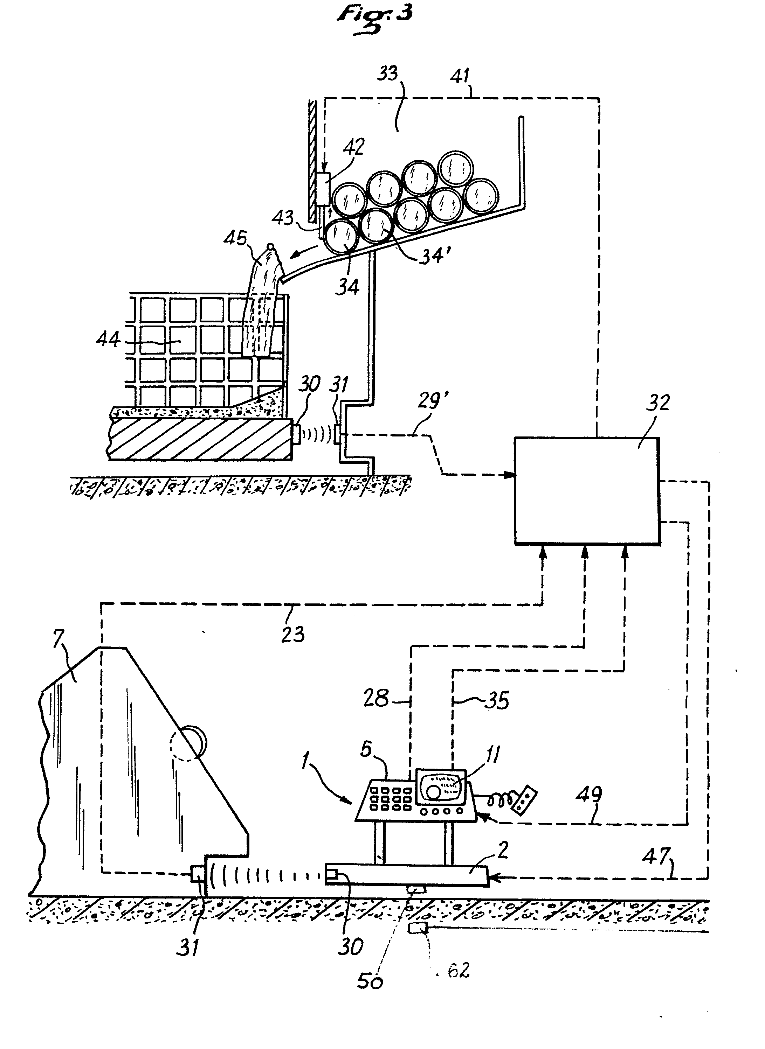

Le chariot auto-moteur individuel 1 comporte des moyens de repérage et d'identification, par exemple sous forme d'un émetteur de signaux magnétiques ou opto-électronique 30 (figure 3) qui sont saisis par des moyens récepteurs 31 disposés au niveau de chaque rayon, de sorte que l'arrivée d'un chariot au niveau d'un rayon déterminé 7 peut être repéré par le rayon 7 et le signal correspondant est envoyé à l'unité centrale 32 par le circuit 29.

Ainsi l'unité centrale 32 peut à la fois programmer le déplacement des chariots et en même temps vérifier que ce déplacement correspond bien à ce qui a été programmé et être informée du positionnement instantané de chacun des chariots individuels.

Le pupitre de commande comporte également un écran 11, qui permet par exemple d'afficher les caractéristiques des produits exposés sur le rayon en regard duquel se trouve à l'instant donné le chariot considéré. L'écran 11 peut ainsi afficher les prix, normes, caractère promotionnel du produit.

Le pupitre comporte encore un boîtier 14 raccordé par fil 13 et pourvu de touches de sélection 15,15',15", permettant au client en position sur le chariot de sélectionner automatiquement, en face du rayon correspondant les articles qu'il désire acheter et par exemple dont l'écran 11 vient d'afficher les caractéristiques. Par exemple chaque touche 15,15',15" correspond à un étage du rayon 7.

Les produits sont exposés à la vue sous forme d'un échantillon type 6,6',6" qui est mis en exergue et apparaît sur chaque étage du rayon de sorte que l'acheteur peut avoir une vue claire des caractéristiques physiques du produit réel tout en étant parfaitement informé de toutes les données (qualité, quantité, prix, prix au poids etc...).

De préférence les produits ne sont pas appréhendés manuellement par le client mais délivrés mécaniquement. Les produits destinés à la vente sont stockés dans un local annexe par exemple à un étage supérieur et inaccessible aux clients et comportant une pluralité de magasins 33 (figure 3) contenant chacun un type de produit 34 ; ce local peut être maintenu à la température voulue notamment propre à la conservation des produits congelés.

Ce local annexe est parcouru par des conteneurs mobiles tels que des seconds chariots 44 ; chaque second chariot 44 destiné à la réception et au transport des marchandises ou produits, est affecté aux achats d'un client particulier (parcourant sur un chariot 1 le local d'exposition formé des rayons 7 contenant les échantillons ou produits types 6,6',6").

L'ordre d'achat reçu par la touche 15,15',15" du boîtier 14 relié au pupitre 5 du chariot 1 est transmis par le circuit 35 à l'unité centrale 32 qui retransmet par le circuit 41 l'ordre de livraison du produit correspondant 34 sur le chariot 44 destiné à rassembler les achats du même client. Par exemple le circuit 41 commande l'action de l'électroaimant 42 qui contrôle la butée 43 retenant ou libérant le produit 34 ; ce dernier lorsqu'il est libéré tombe par le manchon amortisseur 45 dans le chariot 44.

Un système de reconnaissance de position respectivement émetteur récepteur 30,31 permet à l'unité centrale de connaître le positionnement du chariot 44, pour commander la délivrance du produit 34 exactement lorsque le chariot voulu 44 est en position de réception du produit sélectionné.

La délivrance du produit 34 se fait nécessairement avec un certain retard par rapport à l'ordre émis par la touche 15 ; l'ordre est conservé en mémoire par l'unité centrale 32 jusqu'à ce que le chariot 44 correspondant au client émetteur arrive devant le magasin correspondant ; ceci permet au client éventuellement d'annuler l'ordre par action sur la touche 16.

Le parcours des seconds chariots 44 dans le local annexe peut suivre un circuit unique desservant tous les magasins 33 ou être programmé sélectivement par l'unité centrale 32 en fonction du programme de parcours sélectionné par le client correspondant.

Le circuit suivi par les conteneurs ou seconds chariots 44 débouche à l'extérieur du local annexe vers une pluralité de sorties ; ceci après que tous les achats sélectionnés par le client ont été livrés dans le conteneur.

Chaque sortie ou porte correspond par exemple à une zone de parcage où le client a laissé sa voiture et en fin des opérations d'achat avant de quitter son chariot 1, le client affiche sur une touche (P1,P2,P3 etc... figure 2) du pupitre 5 la sortie où il désire récupérer le conteneur qui rassemble ses achats ; l'unité centrale 32 dirige ce conteneur constitué par le second chariot 44 en conséquence.

Le client pourra obtenir la remise du conteneur (à la porte voulue) en affichant à ce niveau un signe de reconnaissance tel qu'un badge, ticket magnétique délivré par la fente 19' du pupitre 5, ou sa carte de crédit.

L'unité centrale intègre les données correspondant aux produits achetés et livrés dans le second chariot 44 et transmet par le circuit 49 au pupitre du chariot correspondant la confirmation de la comptabilisation de l'achat c'est-à-dire que le pupitre va afficher par exemple sur l'écran 11 la valeur de l'achat et la somme totale des achats effectués.

Le client peut également appeler par le clavier 4 toutes sortes de données telle qu'un récapitulatif des achats antérieurs permettant une vérification, des vues d'autres zones de la surface d'exposition, les images étant prises à partir de caméras disposées de place en place et retransmises sur commande à chaque chariot, ceci permettant au client de savoir quel peut être l'état d'encombrement ou de disponibilité de tel ou tel rayon où il envisage de se rendre.

0169118

On pourra également prévoir que la sélection des produits se fasse directement sur l'écran cathodique 11, l'écran affichant sur commande et indépendamment du positionnement du chariot 1 les divers produits en vente et la sélecion se faisant à partir des touches 17 d'ordre d'achat (ou d'annulation 18) sur le pupitre.

En cas d'encombrement momentané, les chariots nouveaux seront introduits dans une file d'attente ; mais ce temps mort n'est pas perdu grâce à la possibilité pour le client de dialoguer par le clavier 4 avec l'unité centrale en faisant apparaître sur l'écran cathodique 11, les données sur les produits qu'il envisage d'acheter ; l'écran constitue alors un véritable catalogue que le client peut consulter pour prévoir et commencer ses achats.

Le pupitre 5 peut également comporter une fente 19 d'introduction 14 pour la réception d'une carte de crédit permettant l'identification de l'utilisateur.

A la sortie, il n'est plus nécessaire dans ce cas d'assurer un passage à une caisse de comptabilité puisque la comptabilisation des achats a déjà été effectuée et affectée dans le même temps à la carte de crédit correspondante.

Dans la mesure où l'encombrement des circuits de circulation le permet, l'utilisateur pourra souhaiter accélérer ou ralen tir son allure et les ordres correspondants peuvent être transmis par les touches 10 et 11 du pupitre individuel ; un arrêt d'urgence peut être commandé par la touche 12.

Dans le cas de contestation ou de problème quelconque quant au montant de la somme, l'utilisateur a à sa disposition sur le pupitre une touche d'appel qui permet soit l'arrivée du personnel de service aux fins de contrôle, soit l'acheminement du chariot vers un poste de contrôle spécifique desservi par le personnel en poste fixe.

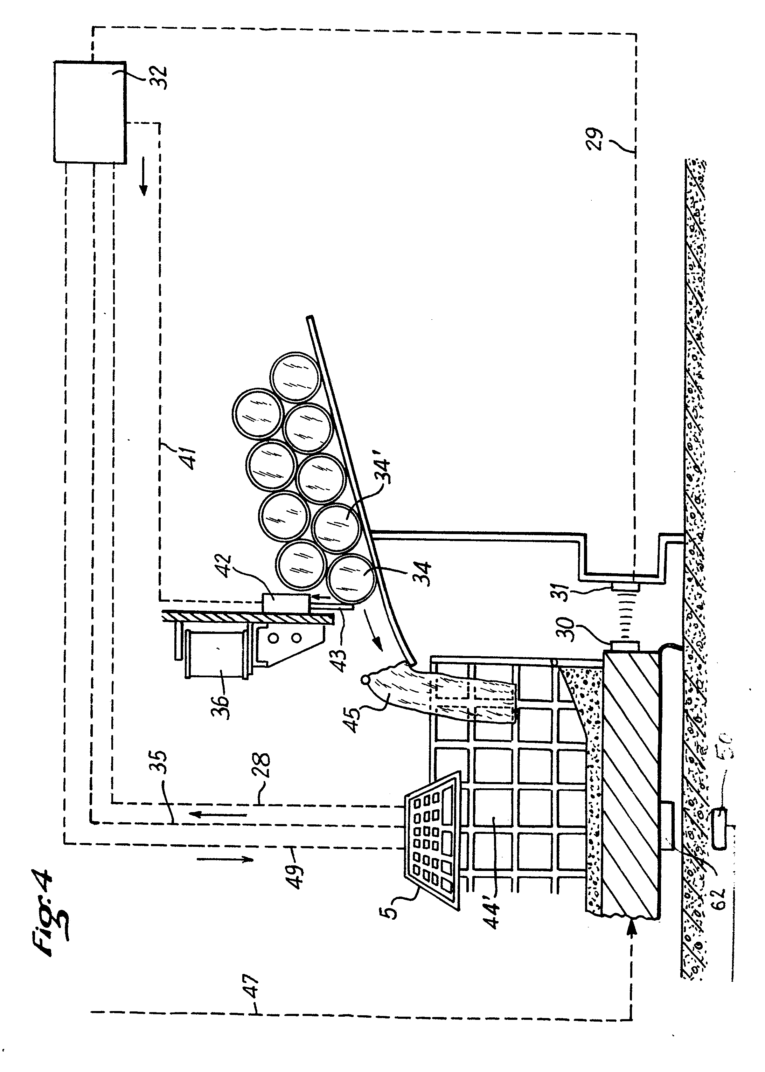

Selon une variante représentée à la figure 4 le chariot 1 peut parcourir les rayons pourvus de produits en stocks, et il comporte un conteneur 44' pour la réception des produits délivrés mécaniquement depuis chaque rayon et exposés en 36. Dans ce cas le chariot remplit les deux fonctions du premier chariot porteur de client et du second chariot récepteur des marchandises. Ces dernières peuvent être délivrés dans le conteneur 44' solidaire du chariot 1 dans les mêmes conditions que décrites ci-dessus et telles que représentées au schéma de la figure 3 ; les mêmes références étant reportées sur la figure 4 pour représenter les mêmes organes que décrits précédemment concernant la figure 3.

Le client peut utiliser sur le pupitre 5 les touches 20,20',20" représentées sur la figure 2 pour sélectionner le circuit d'achat des produits, doubler d'autres chariots et quitter le magasin afin de faciliter sa circulation. Les chariots peuvent être guidés entre les rayons par des moyens convenables tels que des lignes magnétiques 50 noyées dans le sol et coopérant avec le récepteur 62 disposé sur le chariot.

10

0169118

REVENDICATIONS

1 - Dispositif pour la desserte mécanisée de point de vente à grande surface et constitué d'une pluralité d'allées entre des rayons d'exposition de produits, du type comportant une pluralité de chariots (1), pourvu d'organes de déplacement autonome et apte à recevoir et véhiculer au moins un client, et le dispositif est caractérisé en ce qu'il comporte :

1) - des moyens de commande desdits organes de déplacement des chariots (1), aptes à régler la vitesse et la direction de ces derniers ;

2) - une unité centrale (32) telle qu'un micro-processeur, apte à contrôler et harmoniser le circuit de l'ensemble des chariots en service à un instant déterminé en contrôlant à distance lesdits moyens de commande ;

3) - des moyens de sélection (7,8,9) regroupés sur un pupitre de commande (5) situé sur ledit chariot et à la disposition du client et propre à la saisie des ordres de parcours et d'achat du client ;

4) - des moyens de transmission, définissant des circuits de transmission sans fil (28,35,47,49) d'une part desdits ordres depuis le chariot (1) vers l'unité centrale (32) et d'autre part des signaux émis par l'unité centrale et destinés auxdits moyens de commande sur chaque chariot ;

5) - des moyens de repérage (30-31) du positionnement des chariots (1) disposés respectivement sur chaque chariot (1) et sur des points fixes situés sur lesdites allées et rayons (7), ces moyens de repérage étant reliés à l'unité centrale (32) par un circuit de transmission (29) en permettant à

11

0169118

l'unité centrale (32) de vérifier et d'enregistrer à tout moment le positionnement instantané et individuel de chaque chariot (1) ;

6) - et l'unité centrale (32) comporte en outre un programme apte à commander pour chaque chariot (1) en fonction des instructions du client saisi par le pupitre (5), le déplacement dudit chariot selon un circuit desservant les rayons (7) sélectionnés par ledit client.

2 - Dispositif selon la revendication 1, caractérisé en outre en ce que le pupitre de commande (5) comporte des moyens de visualisation tels qu'un écran cathodique (11) propre à afficher un certain nombre de données telles que les caractéristiques des articles ou toutes informations envoyées automatiquement ou sur appel du client depuis l'unité centrale (32) à l'intention du client véhiculé par le chariot (1).

3 - Dispositif selon l'une des revendications 1 ou 2 ci-dessus
caractérisé en ce que chaque chariot (1) comporte sur le pupitre (5) des moyens de repérage de l'identité de l'utilisateur tels qu'une fente d'introduction (19) et de lecture individuelle d'une carte notamment d'une carte magnétique permettant à l'unité centrale (32) de mémoriser l'identité de l'utilisateur de chaque chariot et de comptabiliser à son débit les achats correspondants.

4 - Dispositif selon l'une des revendications 1,2 ou 3 qui précèdent,
caractérisé en ce que le pupitre de commande (5) de chaque chariot (1) comporte des moyens de sélection tels que des touches (15,15',15") permettant de saisir la décision d'achat du produit identifié par le positionnement du chariot face au rayon correspondant (7) ou par son affichage sur l'écran (11) et chaque stand ou rayon comporte des moyens tels que des butées (43) pour la rétention des produits (34,34'), un vérin électromagnétique (42) permettant de contrôler chaque butée et d'assurer la dépose, (par exemple par gravité) du produit (34,34') dans le panier (44') du chariot individuel (1) en position devant le rayon, les ordres d'achat saisis par les touches (15,15') étant transmises par le circuit (37) depuis le pupitre (5) jusqu'à l'unité centrale (32) et retransmis depuis cette unité centrale (32) par le circuit (41) jusqu'au vérin (42) de déblocage.

5 - Dispositif selon l'une des revendications 1,2 ou 3 ci-dessus dans lequel les rayons (7) ne comportent que des produits (6,6') d'exposition sans possibilités de prélèvement manuel par l'utilisateur, chaque chariot (1) comporte des moyens tels que des touches (15,15') pour la sélection des produits exposés (6,6') dans le rayon (7) correspondant au positionnement instantané du chariot (1), et le dispositif comporte un local annexe constituant réserve de stockage des produits et inaccessible au public, ce local annexe comportant une pluralité de magasins (33) contenant les produits (34,34'), le local annexe étant parcouru par une pluralité de conteneurs mobiles tels que des seconds chariots (44) chacun des seconds chariots (44) étant affecté aux achats commandés par un client particulier parcourant le local d'exposition sur un chariot (1), un circuit de transmission (35) des ordres d'achat saisi par les pupitres (5) de chaque chariot (1) étant reçu par l'unité centrale (32) et transmis par un circuit (41) aux organes (42) disposés au niveau de chaque magasin (33) pour assurer la libération des produits (34,34') déposés dans chaque second chariot (44) centralisant les achats du client correspondant.

13

0169118

6 - Dispositif selon la revendication 5, caractérisé en ce que le circuit de parcours des conteneurs mobiles tels que les seconds chariots (44) dans le local annexe se prolonge à l'extérieur dudit local par une pluralité de circuits de sortie aboutissant à une pluralité de portes, chaque porte correspondant à une zone de parcage des véhicules des clients, et chaque porte est munie de moyens de reconnaissance tels qu'un lecteur d'une carte magnétique personnelle au client notamment une carte délivrée par le pupitre (5) du premier chariot en fin des achats du client correspondant, ces moyens de reconnaissance permettant la remise du contenu du second chariot (44) ou de son contenu au client correspondant.

7 - Dispositif selon la revendication 6, caractérisé en ce que le pupitre (5) comporte un jeu de touches ($P_1$, $P_2$, $P_3$) permettant au client d'afficher la porte sélectionnée par lui où il désire prendre livraison du conteneur mobile (44) contenant ses achats et ces touches étant en liaison par le circuit de transmission avec l'unité centrale (32) laquelle est ainsi apte à diriger le déplacement dudit conteneur mobile tel que le second chariot 44 vers la porte correspondante.

8 - Dispositif selon l'une des revendications 1 à 7, caractérisé en ce qu'il comporte des circuits de déplacement des chariots (1) et (44) matérialisés par des réseaux de fils de guidage (50) noyés dans le sol des allées et coopérant avec des moyens de repérage (62) disposés sur chaque chariot.

*Fig:1*

7

6'' 6' 6' 11

5 2 1

11

5 2 1'

14

14

7-1

1/4

0169118

Fig. 2

Fig. 3

3/4

0169118

Fig. 4

Office européen
des brevets

RAPPORT DE RECHERCHE EUROPEENNE

0169118

Numéro de la demande

EP 85 40 1237

## DOCUMENTS CONSIDERES COMME PERTINENTS

| Catégorie | Citation du document avec indication, en cas de besoin, des parties pertinentes | Revendication concernee | CLASSEMENT DE LA DEMANDE (Int Cl.4) |
|---|---|---|---|
| Y | US-A-3 746 130 (BULLAS) <br> * Colonne 1, lignes 20-54; colonne 2, lignes 5-68; colonne 3, lignes 5-58; colonne 4, lignes 35-45 * | 1 | A 47 F 10/00 <br> B 65 G 47/10 |
| A | --- | 3-6 | |
| Y | FR-A-2 240 169 (DE LAISTRE BANTING) <br> * Page 1, ligne 33 - page 2, ligne 23; page 8, lignes 20-40 * <br> --- | 1 | |
| A | US-A-3 532 184 (BLAKE) <br> * Abrégé; colonne 6, lignes 31-56; revendications 1,6 * | 1,5,6 | |
| | ----- | | DOMAINES TECHNIQUES RECHERCHES (Int. Cl.4) <br><br> A 47 F <br> B 65 G <br> G 06 F |

Le présent rapport de recherche a été établi pour toutes les revendications

| Lieu de la recherche | Date d'achèvement de la recherche | Examinateur |
|---|---|---|
| LA HAYE | 25-09-1985 | SCHMITTER BERNARD |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82